# FASCICULE DE BREVET EUROPEEN

(11) **EP 4 273 046 B1**
(45) Date de publication et mention de la délivrance du brevet: **05.03.2025**
(21) Numéro de dépôt: 23171880.0
(22) Date de dépôt: 05.05.2023
(51) Int. Cl.: B64D 37/22, B64D 37/30, B64D 37/06

(54) **RÉSERVOIR COMPORTANT UN DISPOSITIF DE CAPTAGE FONCTIONNANT INDÉPENDAMMENT DE L INCLINAISON DU RÉSERVOIR, AÉRONEF COMPORTANT AU MOINS UN TEL RÉSERVOIR**
TANK MIT EINER AUFFANGVORRICHTUNG, DIE UNABHÄNGIG VON DER NEIGUNG DES TANKS ARBEITET, LUFTFAHRZEUG, DAS MINDESTENS EINEN SOLCHEN TANK UMFASST
TANK COMPRISING A COLLECTING DEVICE OPERATING INDEPENDENTLY OF THE INCLINATION OF THE TANK, AIRCRAFT COMPRISING AT LEAST ONE SUCH TANK

(30) Priorité: 05.05.2022 FR 2204283
(43) Date de publication de la demande: 08.11.2023
(73) Titulaire: AIRBUS OPERATIONS (S.A.S.), 31060 Toulouse (FR)
(72) Inventeur: FOIX, Vincent, 31060 TOULOUSE (FR)
(74) Mandataire: Fantin, Laurent

(56) Documents cités:
- GB-A- 755 624
- KR-A- 20060 064 914
- US-A- 3 979 005
- US-A1- 2005 166 967

## Description

La présente demande se rapporte à un réservoir comportant un dispositif de captage fonctionnant indépendamment de l'inclinaison du réservoir ainsi qu'à un aéronef comportant au moins un tel réservoir.

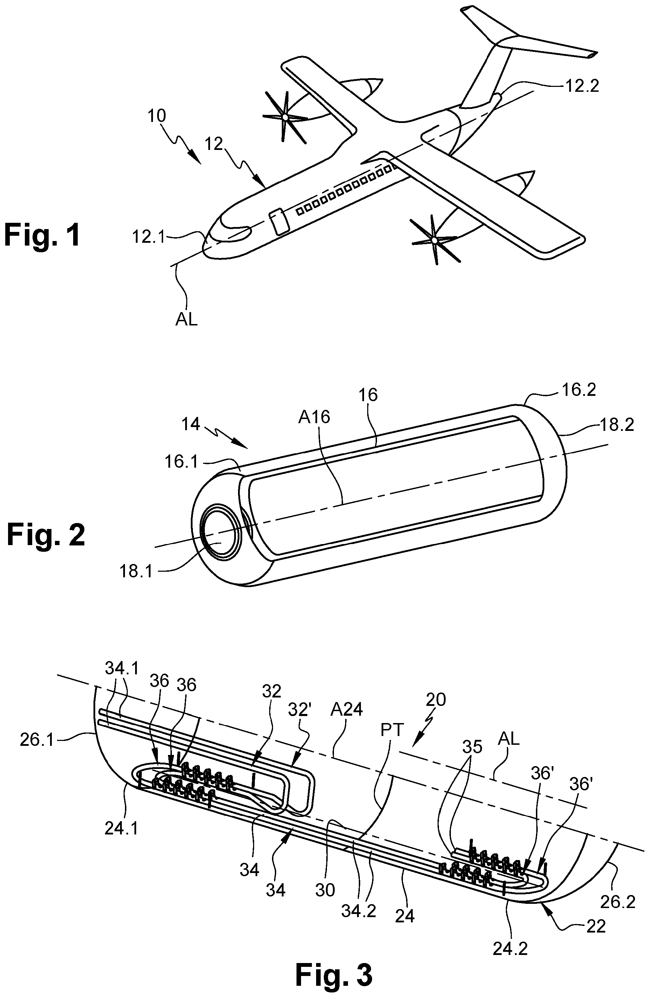

Comme illustré sur la figure 1, un aéronef 10 comprend un fuselage 12 qui s'étend selon un axe longitudinal AL entre une pointe avant 12.1 et une pointe arrière 12.2. En fonction des phases de vol, l'aéronef 10 peut être incliné vers l'arrière (sa pointe arrière 12.2 étant plus basse que sa pointe avant 12.1), notamment lors d'une phase de décollage, ou il peut être incliné vers l'avant (sa pointe avant 12.1 étant plus basse que sa pointe arrière 12.2), notamment lors d'une phase de descente.

Selon une configuration, l'aéronef 10 comprend au moins un réservoir 14 à double paroi pour stocker de l'hydrogène liquide par exemple. Ce réservoir 14 comporte un corps cylindrique 16 qui s'étend entre des première et deuxième extrémités 16.1, 16.2 fermées par des parois d'extrémité 18.1, 18.2 en forme de dôme. Selon un agencement, le corps cylindrique 16 présente un axe de révolution A16 sensiblement parallèle à l'axe longitudinal AL, la première extrémité 16.1 étant orientée vers l'avant de l'aéronef et la deuxième extrémité 16.2 vers l'arrière.

L'aéronef 10 comprend également un circuit de carburant comportant un dispositif de captage, positionné dans le réservoir 14, permettant de capter le carburant afin de le faire sortir du réservoir 14. Selon un mode de réalisation, ce dispositif de captage comprend un conduit dont une extrémité débouche au niveau ou à proximité du fond du réservoir 14.

Dans le cas d'un réservoir positionné dans un aéronef, le point bas du réservoir n'est pas toujours situé au même endroit en fonction de la phase de vol. Ainsi, le point bas du réservoir 14 est situé au niveau de la première extrémité 16.1 du réservoir 16 lorsque l'aéronef 10 est incliné vers l'avant ou est situé au niveau de la deuxième extrémité 16.2 lorsque l'aéronef est incliné vers l'arrière.

Quel que soit son positionnement, le dispositif de captage ne permet pas d'obtenir une vidange optimale du réservoir. Ainsi, il est nécessaire de prévoir un volume supplémentaire de carburant dans le réservoir, qui n'est pas utilisé mais est nécessaire pour garantir que le dispositif de captage soit toujours immergé, et ce quelle que soit l'inclinaison de l'aéronef, lorsque la quantité de carburant dans le réservoir est faible et que le niveau de carburant dans le réservoir est bas.

Selon un mode de réalisation décrit dans le document KR20060064914, un réservoir comprend un dispositif de captage qui comporte un orifice positionné à proximité du fond du réservoir, un clapet mobile entre une position ouverte dans laquelle le clapet dégage l'orifice et une position fermée dans laquelle le clapet obture l'orifice ainsi qu'un flotteur relié au clapet pour le déplacer entre les positions fermée et ouverte. Ce dispositif de captage est relativement complexe.

La présente invention vise à remédier à tout ou partie des inconvénients de l'art antérieur. A cet effet, l'invention a pour objet un réservoir configuré pour stocker un liquide, comprenant :
- au moins une enceinte comportant un fond qui s'étend entre des première et deuxième extrémités,
- au moins un dispositif de captage comportant au moins un conduit positionné sur le fond ou à proximité de ce dernier, chaque conduit présentant une face inférieure orientée vers le fond de l'enceinte ainsi qu'une face supérieure opposée à la face inférieure.

Selon l'invention, le dispositif de captage comprend au moins un premier tronçon de conduit à proximité de la première extrémité ainsi qu'au moins un deuxième tronçon de conduit à proximité de la deuxième extrémité, chacun des premier et deuxième tronçons comportant au moins un orifice situé sur la face supérieure du conduit. En complément, le dispositif de captage comprend, pour chaque orifice, un obturateur flottant mobile entre une position ouverte dans laquelle l'obturateur flottant est écarté de l'orifice et une position fermée dans laquelle l'obturateur flottant obture l'orifice, l'obturateur flottant présentant une densité inférieure à celle du liquide stocké dans le réservoir.

Cette solution permet d'optimiser la vidange du réservoir. Quelle que soit l'inclinaison du réservoir, il existe au moins un orifice toujours immergé via lequel peut être capté le liquide pour l'extraire du réservoir même lorsque le niveau du liquide dans le réservoir est bas.

Selon une autre caractéristique, le dispositif de captage comprend, pour chaque obturateur flottant, un support pivotant qui présente une première extrémité reliée par une première liaison pivotante au conduit ou à l'enceinte ainsi qu'une deuxième extrémité reliée à l'obturateur flottant.

Selon une autre caractéristique, chaque conduit comprenant un plan médian séparant les faces inférieure et supérieure, la première liaison pivotante relie le support pivotant ainsi que le conduit et comprend un premier axe de pivotement, sensiblement perpendiculaire à l'axe du conduit, contenu dans le plan médian ou dans un plan parallèle au plan médian.

Selon une autre caractéristique, chaque support pivotant comprend deux branches, parallèles entre elles et positionnées de part et d'autre du conduit et de l'obturateur flottant, configurées pour pivoter dans des plans perpendiculaires au premier axe de pivotement, chacune des branches reliant le conduit et l'obturateur flottant.

Selon une autre caractéristique, pour chaque premier tronçon situé à proximité de la première extrémité ainsi que pour chaque couple comportant un orifice et un obturateur flottant, le premier axe de pivotement du support pivotant de l'obturateur flottant est plus proche de la première extrémité que l'orifice. En complément, pour chaque deuxième tronçon situé à proximité de la deuxième extrémité ainsi que pour chaque couple comportant un orifice et un obturateur flottant, le premier axe de pivotement du support pivotant de l'obturateur flottant est plus proche de la deuxième extrémité que l'orifice.

Selon une autre caractéristique, chaque obturateur flottant est une sphère, chaque orifice étant sensiblement circulaire.

Selon une autre caractéristique, le premier tronçon décrit une trajectoire en U présentant une base orientée vers la première extrémité, le deuxième tronçon décrivant une trajectoire en U présentant une base orientée vers la deuxième extrémité.

Selon une autre caractéristique, chaque dispositif de captage comprend un conduit comportant en série une première partie sortant de l'enceinte, le premier tronçon en U positionné à proximité de la première extrémité de l'enceinte, un tronçon intermédiaire rectiligne ainsi que le deuxième tronçon en U positionné à proximité de la deuxième extrémité.

L'invention a également pour objet un aéronef comportant au moins un réservoir selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue en perspective d'un réservoir à double paroi,
- La figure 3 est une vue en perspective d'une partie intérieure d'un réservoir équipé d'un dispositif de captage illustrant un mode de réalisation de l'invention,
- La figure 4 est une vue en perspective d'une partie d'un dispositif de captage,
- La figure 5 est une vue en perspective d'un orifice et d'un obturateur flottant en position ouverte illustrant un mode de réalisation de l'invention,
- La figure 6 est une vue latérale d'un orifice et d'un obturateur flottant en position fermée illustrant un mode de réalisation de l'invention,
- La figure 7 est une vue latérale d'une première partie d'un dispositif de captage, lorsque le réservoir est incliné dans un premier sens, illustrant un mode de réalisation de l'invention, et
- La figure 8 est une vue latérale d'une deuxième partie d'un dispositif de captage, lorsque le réservoir est incliné dans le premier sens, illustrant un mode de réalisation de l'invention.

Selon un mode de réalisation visible sur la figure 3, un réservoir 20 comprend au moins une enceinte 22 qui comporte un corps cylindrique 24 s'étendant entre des première et deuxième extrémités 24.1, 24.2 ainsi que des parois d'extrémité 26.1, 26.2 configurées pour fermer les première et deuxième extrémités 24.1, 24.2 du corps cylindrique 24. Le corps cylindrique 24 présente un axe de révolution A24.

Selon une application, un aéronef comprend au moins un réservoir 20 positionné de manière à ce que son axe de révolution A24 soit parallèle à l'axe longitudinal AL et configuré pour stocker de l'hydrogène à l'état liquide. En fonctionnement, le réservoir 20 peut être incliné vers l'avant ou vers l'arrière en fonction des phases de vol.

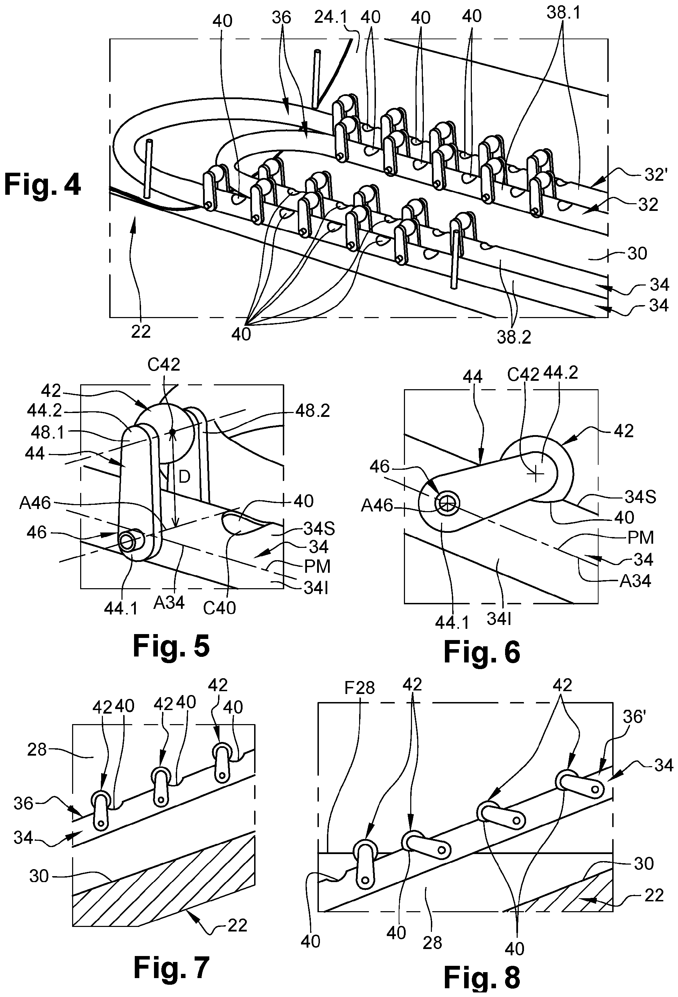

Bien entendu, l'invention n'est pas limitée à cette application. Quel que soit le mode de réalisation, le réservoir 20 est configuré pour stocker un liquide 28 (visible sur les figures 7 et 8) et comprend au moins une enceinte 22 comportant un fond 30 qui s'étend entre des première et deuxième extrémités 24.1, 24.2 orientées selon une première direction. Le liquide 28 présente une surface F28, visible sur la figure 8, correspondant à l'interface entre le liquide 28 et le gaz situé au-dessus du liquide 28. En fonctionnement, le réservoir 20 peut basculer dans un plan de basculement, vertical et passant par la première direction, autour d'un axe de basculement sensiblement perpendiculaire au plan de basculement.

L'enceinte 22 comprend un plan médian transversal PT perpendiculaire à l'axe de révolution A24 et positionné à équidistance des première et deuxième extrémités 24.1, 24.2.

Le réservoir 20 comprend au moins un dispositif de captage 32 permettant de capter le liquide 28 présent dans le réservoir 20 pour le faire sortir de l'enceinte 22.

Selon une configuration visible sur les figures 3 et 4, le réservoir 20 comprend deux dispositifs de captage 32, 32'.

Chaque dispositif de captage 32, 32' comprend au moins un conduit 34, positionné sur le fond 30 ou très proche de ce dernier, qui présente au moins un tronçon 36 positionné à proximité de la première ou deuxième extrémité 24.1, 24.2. Chaque conduit 34 présente une première extrémité 35 obturée, située dans l'enceinte 22, au niveau du fond 30, ainsi qu'une deuxième extrémité située à l'extérieur de l'enceinte 22.

Selon une première configuration non représentée, le dispositif de captage 32, 32' comprend deux conduits 34, un premier conduit comportant un tronçon positionné à proximité de la première extrémité 24.1 et un deuxième conduit comportant un tronçon positionné à proximité de la deuxième extrémité 24.2.

Selon une deuxième configuration visible sur la figure 3, le dispositif de captage 32, 32' comprend un premier tronçon 36 à proximité de la première extrémité 24.1 et un deuxième tronçon 36' à proximité de la deuxième extrémité 24.2, les premier et deuxième tronçons 36, 36' étant disposés en série.

Selon un agencement, chaque tronçon 36, 36' décrit une trajectoire en U comportant des première et deuxième branches 38.1, 38.2 sensiblement parallèles entre elles.

Selon un mode de réalisation, chaque dispositif de captage 32, 32' comprend un conduit 34 comportant en série une première partie 34.1 sortant de l'enceinte 22, un premier tronçon 36 en U positionné à proximité d'une première extrémité 24.1 de l'enceinte 22 dont la base du U est orientée vers la première extrémité 24.1, un tronçon intermédiaire rectiligne 34.2 ainsi qu'un deuxième tronçon 36' en U positionné à proximité d'une deuxième extrémité 24.2 de l'enceinte 22 dont la base du U est orientée vers la deuxième extrémité 24.2.

Bien entendu, l'invention n'est pas limitée à cet agencement. Quelle que soit la configuration, le dispositif de captage 32, 32' comprend au moins un premier tronçon 36 de conduit 34 à proximité de la première extrémité 24.1 ainsi qu'au moins un deuxième tronçon 36' de conduit 34 à proximité de la deuxième extrémité 24.2.

Pour chaque tronçon 36, 36', le conduit 34 comprend une face inférieure 34I orientée vers le bas et le fond 30 de l'enceinte 22 ainsi qu'une face supérieure 345 opposée à la face inférieure 34I et orientée vers le haut, les faces inférieure et supérieure 34I, 34S étant séparées par un plan médian PM. Selon une configuration, le plan médian PM est perpendiculaire au plan de basculement.

Chacun des premier et deuxième tronçons 36, 36' de conduit 34 comprend un orifice 40, sensiblement circulaire, situé sur la face supérieure 34S du conduit 34. Selon une configuration, chaque branche 38.1, 38.2 de chaque tronçon 36, 36' de chaque conduit 34 comprend plusieurs orifices 40 régulièrement espacés.

Le dispositif de captage 32 comprend, pour chaque orifice 40, un obturateur flottant 42 mobile entre une position ouverte, visible sur la figure 5, dans laquelle l'obturateur flottant 42 est écarté de l'orifice 40 et une position fermée, visible sur la figure 6, dans laquelle l'obturateur flottant 42 obture l'orifice 40. L'obturateur flottant 42 présente une densité inférieure à celle du liquide 28.

Selon un mode de réalisation, l'obturateur flottant 42 a une forme sphérique qui présente un diamètre supérieur à celui de l'orifice 40.

L'orifice 40 et l'obturateur flottant 42 ne sont pas limités à ces géométries. Quel que soit le mode de réalisation, l'orifice 40 et l'obturateur flottant 42 sont configurés de sorte qu'en position fermée, l'obturateur flottant 42 bouche l'orifice 40 et empêche un écoulement d'un fluide entre l'intérieur et l'extérieur du conduit 34. Lorsque l'obturateur flottant 42 bouche l'orifice 40, cela permet en outre d'éviter un désamorçage d'une pompe utilisée pour pomper le liquide 28 dans le réservoir 20.

Pour chaque obturateur flottant 42, le dispositif de captage 32 comprend un support pivotant 44 qui présente une première extrémité 44.1 reliée par une première liaison pivotante 46 au conduit 34 ainsi qu'une deuxième extrémité 44.2 reliée à l'obturateur flottant 42. Au droit de la première liaison pivotante 46, le conduit 34, sensiblement cylindrique, présente un axe de conduit A34. La première liaison pivotante 46 comprend un premier axe de pivotement A46 contenu dans le plan médian PM ou dans un plan parallèle au plan médian PM et sensiblement perpendiculaire à l'axe de conduit A34.

Selon un autre mode de réalisation, la première liaison pivotante 46 relie l'obturateur flottant 42 et l'enceinte 22.

Selon une configuration, la deuxième extrémité 44.2 et l'obturateur flottant 42 sont reliés par une deuxième liaison pivotante qui présente un deuxième axe de pivotement sensiblement parallèle au premier axe de pivotement A46. En variante, la deuxième extrémité 44.2 et l'obturateur flottant 42 sont reliés par une liaison rigide ou toute autre liaison.

Selon un mode de réalisation non limitatif, chaque support pivotant 44 comprend deux branches 48.1, 48.2, parallèles entre elles et positionnées de part et d'autre du conduit 34 et de l'obturateur flottant 42, configurées pour pivoter dans des plans perpendiculaires au premier axe de pivotement A46, chacune des branches 48.1, 48.2 reliant le conduit 34 et l'obturateur flottant 42. Selon un mode de réalisation, chaque branche 48.1, 48.2 est découpée dans une plaque.

En variante, un support pivotant 44 peut comprendre une seule branche pivotante, positionnée d'un seul côté de l'obturateur flottant 42.

Selon un agencement, pour un obturateur flottant 42 donné, son centre C42 et le premier axe de pivotement A46 du support pivotant 44 de l'obturateur 42 sont séparés d'une distance D sensiblement égale à une distance séparant le premier axe de pivotement A46 et le centre C40 de l'orifice 40 associé à l'obturateur flottant 42.

Pour chaque couple comportant un orifice 40 et un obturateur flottant 42, le premier axe de pivotement A46 du support pivotant 44 de l'obturateur flottant 42 est séparé du plan médian transversal PT d'une distance supérieure à celle séparant l'orifice 40 et le plan médian transversal PT.

Ainsi, pour chaque premier tronçon 36 situé à proximité de la première extrémité 24.1 ainsi que pour chaque couple comportant un orifice 40 et un obturateur flottant 42, le premier axe de pivotement A46 du support pivotant 44 de l'obturateur flottant 42 est plus proche de la première extrémité 24.1 que l'orifice 40, comme illustré sur les figures 4 à 6. Pour chaque deuxième tronçon 36' situé à proximité de la deuxième extrémité 24.2 ainsi que pour chaque couple comportant un orifice 40 et un obturateur flottant 42, le premier axe de pivotement A46 du support pivotant 44 de l'obturateur flottant 42 est plus proche de la deuxième extrémité 24.2 que l'orifice 40, comme illustré sur la figure 7.

Le principe de fonctionnement du dispositif de captage 32, 32' est le suivant :
Lorsque les obturateurs flottants 42 sont immergés, ils sont en position ouverte et le liquide 28 présent dans l'enceinte 22 est capté via les orifices 40 du conduit 34.

Lorsque le réservoir 20 bascule dans un premier sens et que la première extrémité 24.1 est plus basse que la deuxième extrémité 24.2 comme illustré sur les figures 7 et 8, les obturateurs flottants 42 situés au niveau du premier tronçon 36 sont toujours immergés et en position ouverte, comme illustré sur la figure 7. Au niveau du deuxième tronçon 36' situé à proximité de la deuxième extrémité 24.2, certains obturateurs flottants 42 sont toujours immergés et en position ouverte alors que d'autres obturateurs flottants 42, hors du liquide 28, pivotent jusqu'à obturer les orifices 40 correspondants, comme illustré sur la figure 8. Ainsi, le liquide 28 présent dans l'enceinte 22 est extrait via les orifices 40 du premier tronçon 36 du conduit 34 et via les orifices 40 du deuxième tronçon 36' pour lesquels les obturateurs flottants 42 sont immergés et en position ouverte.

Lorsque le réservoir 20 bascule dans un deuxième sens et que la deuxième extrémité 24.2 est plus basse que la première extrémité 24.1, les obturateurs flottants 42 situés au niveau du deuxième tronçon 36' sont toujours immergés et en position ouverte. Au niveau du premier tronçon 36 situé à proximité de la première extrémité, certains obturateurs flottants 42 sont toujours immergés et en position ouverte alors que d'autres obturateurs flottants 42, hors du liquide 28, pivotent jusqu'à obturer les orifices 40 correspondants. Ainsi, le liquide 28 présent dans l'enceinte 22 est extrait via les orifices 40 du deuxième tronçon 36' du conduit 34 et via les orifices 40 du premier tronçon 36 pour lesquels les obturateurs flottants 42 sont immergés et en position ouverte.

Quelle que soit l'inclinaison du réservoir 20, il existe au moins un orifice 40 toujours immergé via lequel peut être capté le liquide 28 pour l'extraire du réservoir 20 même lorsque la quantité de liquide dans le réservoir est faible et que le niveau F28 du liquide dans le réservoir 20 est bas. Les orifices 40 situés hors du liquide 28 sont automatiquement fermés par les obturateurs flottants 42.

Cette solution permet d'optimiser la vidange du réservoir 20 si bien qu'il n'est plus nécessaire de prévoir un volume de liquide supplémentaire pour garantir qu'un orifice du dispositif de captage soit toujours immergé quelle que soit l'inclinaison du réservoir 20.

## Revendications

1. Réservoir configuré pour stocker un liquide (28), comprenant :
- au moins une enceinte (22) comportant un fond (30) qui s'étend entre des première et deuxième extrémités (24.1, 24.2),
- au moins un dispositif de captage (32, 32') comportant au moins un conduit (34) positionné sur le fond (30) ou à proximité de ce dernier, chaque conduit (34) présentant une face inférieure (34I) orientée vers le fond (30) de l'enceinte (22) ainsi qu'une face supérieure (345) opposée à la face inférieure (34I),
le dispositif de captage (32, 32') comprenant au moins un premier tronçon (36) de conduit (34) à proximité de la première extrémité (24.1) ainsi qu'au moins un deuxième tronçon (36') de conduit (34) à proximité de la deuxième extrémité (24.2), **caractérisé en ce que** chacun des premier et deuxième tronçons (36, 36') comporte au moins un orifice (40) situé sur la face supérieure (34S) du conduit (34) et **en ce que** le dispositif de captage (32, 32') comprend, pour chaque orifice (40), un obturateur flottant (42) mobile entre une position ouverte dans laquelle l'obturateur flottant (42) est écarté de l'orifice (40) et une position fermée dans laquelle l'obturateur flottant (42) obture l'orifice (40), l'obturateur flottant (42) présentant une densité inférieure à celle du liquide (28) stocké dans le réservoir.

2. Réservoir selon la revendication 1, **caractérisé en ce que** le dispositif de captage (32, 32') comprend, pour chaque obturateur flottant (42), un support pivotant (44) qui présente une première extrémité (44.1) reliée par une première liaison pivotante (46) au conduit (34) ou à l'enceinte (22) ainsi qu'une deuxième extrémité (44.2) reliée à l'obturateur flottant (42).

3. Réservoir selon la revendication précédente, **caractérisé en ce que** chaque conduit (34) comprend un plan médian (PM) séparant les faces inférieure et supérieure (34I, 34S) et **en ce que** la première liaison pivotante (46) relie le support pivotant (44) ainsi que le conduit (34) et comprend un premier axe de pivotement (A46) sensiblement perpendiculaire à l'axe (A34) du conduit (34) et contenu dans le plan médian (PM) ou dans un plan parallèle au plan médian (PM).

4. Réservoir selon la revendication précédente, **caractérisé en ce que** chaque support pivotant (44) comprend deux branches (48.1, 48.2), parallèles entre elles et positionnées de part et d'autre du conduit (34) et de l'obturateur flottant (42), configurées pour pivoter dans des plans perpendiculaires au premier axe de pivotement (A46), chacune des branches (48.1, 48.2) reliant le conduit (34) et l'obturateur flottant (42).

5. Réservoir selon l'une des revendications 3 à 4, **caractérisé en ce que**, pour chaque premier tronçon (36) situé à proximité de la première extrémité (24.1) ainsi que pour chaque couple comportant un orifice (40) et un obturateur flottant (42), le premier axe de pivotement (A46) du support pivotant (44) de l'obturateur flottant (42) est plus proche de la première extrémité (24.1) que l'orifice (40) et **en ce que** pour chaque deuxième tronçon (36') situé à proximité de la deuxième extrémité (24.2) ainsi que pour chaque couple comportant un orifice (40) et un obturateur flottant (42), le premier axe de pivotement (A46) du support pivotant (44) de l'obturateur flottant (42) est plus proche de la deuxième extrémité (24.2) que l'orifice (40).

6. Réservoir selon l'une des revendications précédentes, **caractérisé en ce que** chaque obturateur flottant (42) est une sphère et **en ce que** chaque orifice (40) est sensiblement circulaire.

7. Réservoir selon l'une des revendications précédentes, **caractérisé en ce que** le premier tronçon (36) décrit une trajectoire en U présentant une base orientée vers la première extrémité (24.1) et **en ce que** le deuxième tronçon (36') décrit une trajectoire en U présentant une base orientée vers la deuxième extrémité (24.2).

8. Réservoir selon la revendication précédente, **caractérisé en ce que** chaque dispositif de captage (32, 32') comprend un conduit (34) comportant en série une première partie (34.1) sortant de l'enceinte (22), le premier tronçon (36) en U positionné à proximité de la première extrémité (24.1) de l'enceinte (22), un tronçon intermédiaire rectiligne (34.2) ainsi que le deuxième tronçon (36') en U positionné à proximité de la deuxième extrémité (24.2).

9. Aéronef comportant au moins un réservoir selon l'une des revendications précédentes.

## Patentansprüche

1. Behälter, der zum Aufbewahren einer Flüssigkeit (28) eingerichtet ist, mit:
- wenigstens einem Gehäuse (22) mit einem Boden (30), der sich zwischen einem ersten und einem zweiten Ende (24.1, 24.2) erstreckt,
- wenigstens einer Auffangvorrichtung (32, 32') mit wenigstens einer Leitung (34), die auf dem Boden (30) oder in dessen Nähe angeordnet ist, wobei jede Leitung (34) eine dem Boden (30) des Gehäuses (22) zugewandte Unterseite (34I) sowie eine Oberseite (34S) aufweist, die der Unterseite (34I) gegenüberliegt,
wobei die Auffangeinrichtung (32, 32') wenigstens einen ersten Abschnitt (36) der Leitung (34) in der Nähe des ersten Endes (24.1) sowie wenigstens einen zweiten Abschnitt (36') der Leitung (34) in der Nähe des zweiten Endes (24.2) aufweist, **dadurch gekennzeichnet, dass** jeder der ersten und zweiten Abschnitte (36, 36') wenigstens eine Öffnung (40) aufweist, die sich auf der Oberseite (34S) der Leitung (34) befindet, und dass die Auffangvorrichtung (32, 32') für jede Öffnung (40) einen schwimmenden Verschluss (42) aufweist, der zwischen einer offenen Stellung, in der der schwimmende Verschluss (42) von der Öffnung (40) beabstandet ist, und einer geschlossenen Stellung, in der der schwimmende Verschluss (42) die Öffnung (40) verschließt, beweglich ist, wobei der schwimmende Verschluss (42) eine geringere Dichte als die der im Behälter gespeicherten Flüssigkeit (28) aufweist.

2. Behälter nach Anspruch 1, **dadurch gekennzeichnet, dass** die Auffangvorrichtung (32, 32') für jeden schwimmenden Verschluss (42) eine Schwenkhalterung (44) umfasst, die ein erstes Ende (44.1), das über eine erste Schwenkverbindung (46) mit der Leitung (34) oder dem Gehäuse (22) verbunden ist, sowie ein zweites Ende (44.2) aufweist, das mit dem schwimmenden Verschluss (42) verbunden ist.

3. Behälter nach dem vorhergehenden Anspruch, **dadurch gekennzeichnet, dass** jede Leitung (34) eine Mittelebene (PM) umfasst, die die Unter- und Oberseite (34I, 34S) trennt, und dass die erste Schwenkverbindung (46) die Schwenkhalterung (44) sowie die Leitung (34) verbindet und eine erste Schwenkachse (A46) umfasst, die im Wesentlichen im rechten Winkel zur Achse (A34) der Leitung (34) verläuft und in der Mittelebene (PM) oder in einer Ebene parallel zur Mittelebene (PM) enthalten ist.

4. Behälter nach dem vorhergehenden Anspruch, **dadurch gekennzeichnet, dass** jede Schwenkhalterung (44) zwei Schenkel (48.1, 48.2) umfasst, die parallel zueinander verlaufen und auf beiden Seiten der Leitung (34) und des schwimmenden Verschlusses (42) angeordnet sind und so eingerichtet sind, dass sie in Ebenen im rechten Winkel zur ersten Schwenkachse (A46) schwenken, wobei jeder der Schenkel (48.1, 48.2) die Leitung (34) und den schwimmenden Verschluss (42) verbindet.

5. Behälter nach einem der Ansprüche 3 bis 4, **dadurch gekennzeichnet, dass** für jeden ersten Abschnitt (36), der sich in der Nähe des ersten Endes (24.1) befindet, sowie für jedes Paar, das eine Öffnung (40) und einen schwimmenden Verschluss (42) umfasst, die erste Schwenkachse (A46) des schwenkbaren Trägers (44) des schwimmenden Verschlusses (42) näher an dem ersten Ende (24.1) liegt als die Öffnung (40) und dass für jeden zweiten Abschnitt (36'), der sich in der Nähe des zweiten Endes (24.2) befindet, sowie für jedes Paar, das eine Öffnung (40) und einen schwimmenden Verschluss (42) umfasst, die erste Schwenkachse (A46) der schwenkbaren Halterung (44) des schwimmenden Verschlusses (42) näher am zweiten Ende (24.2) liegt als die Öffnung (40).

6. Behälter nach einem der vorhergehenden Ansprüche, **dadurch gekennzeichnet, dass** jeder schwimmende Verschluss (42) eine Kugel ist und dass jede Öffnung (40) im Wesentlichen kreisförmig ist.

7. Behälter nach einem der vorhergehenden Ansprüche, **dadurch gekennzeichnet, dass** der erste Abschnitt (36) eine U-förmige Bahn beschreibt, die eine zum ersten Ende (24.1) gerichtete Basis aufweist, und dass der zweite Abschnitt (36') eine U-förmige Bahn beschreibt, die eine zum zweiten Ende (24.2) gerichtete Basis aufweist.

8. Behälter nach dem vorhergehenden Anspruch, **dadurch gekennzeichnet, dass** jede Auffangvorrichtung (32, 32') eine Leitung (34) aufweist, die nacheinander einen ersten Teil (34.1), der aus dem Gehäuse (22) austritt, den ersten U-förmigen Abschnitt (36), der in der Nähe des ersten Endes (24.1) des Gehäuses (22) angeordnet ist, einen geradlinigen Zwischenabschnitt (34.2) sowie den zweiten U-förmigen Abschnitt (36') umfasst, der in der Nähe des zweiten Endes (24.2) angeordnet ist.

9. Luftfahrzeug mit wenigstens einem Behälter nach einem der vorhergehenden Ansprüche.

## Claims

1. Tank configured to store a liquid (28), comprising:
- at least one chamber (22) comprising a bottom (30) which extends between first and second ends (24.1, 24.2),
- at least one capture device (32, 32') comprising at least one line (34) positioned on the bottom (30) or in the vicinity thereof, each line (34) having a lower face (34I) oriented toward the bottom (30) of the chamber (22) and an upper face (34S) opposite to the lower face (34I),
the capture device (32, 32') comprising at least a first portion (36) of line (34) in the vicinity of the first end (24.1) and at least a second portion (36') of line (34) in the vicinity of the second end (24.2), **characterized in that** each of the first and second portions (36, 36') comprises at least one orifice (40) situated on the upper face (34S) of the line (34), and **in that** the capture device (32, 32') comprises, for each orifice (40), a floating shut-off device (42) that is movable between an open position in which the floating shut-off device (42) is spaced apart from the orifice (40) and a closed position in which the floating shut-off device (42) shuts off the orifice (40), the floating shut-off device (42) having a density lower than that of the liquid (28) stored in the tank.

2. Tank as claimed in claim 1, wherein the capture device (32, 32') comprises, for each floating shut-off device (42), a pivoting support (44) which has a first end (44.1) connected to the line (34) or to the chamber (22) by a first pivoting connection (46) and a second end (44.2) connected to the floating shut-off device (42).

3. Tank as claimed in the preceding claim, wherein each line (34) comprises a median plane (PM) separating the lower and upper faces (34I, 34S), and in that the first pivoting connection (46) connects the pivoting support (44) and the line (34) and comprises a first pivot axis (A46) that is substantially perpendicular to the axis (A34) of the line (34) and that is contained in the median plane (PM) or in a plane parallel to the median plane (PM).

4. Tank as claimed in the preceding claim, wherein each pivoting support (44) comprises two branches (48.1, 48.2) that are parallel to one another and positioned on either side of the line (34) and of the floating shut-off device (42) and that are configured to pivot in planes perpendicular to the first pivot axis (A46), each of the branches (48.1, 48.2) connecting the line (34) and the floating shut-off device (42).

5. Tank as claimed in one of claims 3 to 4, wherein, for each first portion (36) situated in the vicinity of the first end (24.1) and for each pair comprising an orifice (40) and a floating shut-off device (42), the first pivot axis (A46) of the pivoting support (44) of the floating shut-off device (42) is closer to the first end (24.1) than the orifice (40), and in that, for each second portion (36') situated in the vicinity of the second end (24.2) and for each pair comprising an orifice (40) and a floating shut-off device (42), the first pivot axis (A46) of the pivoting support (44) of the floating shut-off device (42) is closer to the second end (24.2) than the orifice (40).

6. Tank as claimed in one of the preceding claims, wherein each floating shut-off device (42) is a sphere, and in that each orifice (40) is substantially circular.

7. Tank as claimed in one of the preceding claims, wherein the first portion (36) describes a trajectory in the shape of a U having a base oriented toward the first end (24.1), and in that the second portion (36') describes a trajectory in the shape of a U having a base oriented toward the second end (24.2).

8. Tank as claimed in the preceding claim, wherein each capture device (32, 32') comprises a line (34) comprising, in series, a first part (34.1) exiting the chamber (22), the first U-shaped portion (36) positioned in the vicinity of the first end (24.1) of the chamber (22), a rectilinear intermediate portion (34.2) and the second U-shaped portion (36') positioned in the vicinity of the second end (24.2).

9. Aircraft comprising at least one tank as claimed in one of the preceding claims.
